# EUROPÄISCHE PATENTSCHRIFT

(11) **EP 3 255 297 B1**
(45) Veröffentlichungstag und Bekanntmachung des Hinweises auf die Patenterteilung: **03.07.2019**
(21) Anmeldenummer: 17169606.5
(22) Anmeldetag: 05.05.2017
(51) Int. Cl.: F16D 13/75

(54) **KUPPLUNG SOWIE KRAFTFAHRZEUG**
COUPLING AND MOTOR VEHICLE
EMBRAYAGE ET VÉHICULE AUTOMOBILE

(30) Priorität: 07.06.2016 DE 102016210012
(43) Veröffentlichungstag der Anmeldung: 13.12.2017
(73) Patentinhaber: ZF Friedrichshafen AG, 88046 Friedrichshafen (DE)
(72) Erfinder: Walter, Andreas, 44149 Dortmund (DE); Schmedding, Christian, 97490 Poppenhausen (DE)

(56) Entgegenhaltungen:
- WO-A1-01/75322
- DE-A1-102014 118 441

## Beschreibung

Die Erfindung betrifft eine Kupplung für ein Kraftfahrzeug mit einem Verschleißausgleichsmechanismus, der ein Sensorelement zur Erfassung von Verschleiß umfasst, wobei das Sensorelement mehrteilig ausgebildet ist und zumindest zwei Sensorbauteile drehbar miteinander verbunden sind.

Während der Lebensdauer einer Kupplung verschleißt unter anderem der Kupplungsscheibenbelag, wodurch sich die Einrückposition der Membranfeder verändert. Um diesen Verschleiß auszugleichen ist es bekannt, dass ein Verschleißausgleichmechanismus vorgesehen wird. Derartige Verschleißausgleichmechanismen umfassen üblicherweise gegenläufige Rampen, wobei in Umfangsrichtung üblicherweise mehrere Rampen hintereinander angeordnet sind. Die entsprechenden gegenläufigen Rampen befinden sich dann in Axialrichtung gegenüber den ersten Rampen.

Zur Erfassung des Verschleißes weisen die Verschleißausgleichsmechanismen unterschiedliche Vorrichtungen auf. Bei einem ersten Verschleißausgleichsmechanismus wird ein blockierter Schieber freigegeben, wenn der als Stift ausgebildete Sensor das Sperrelement vom Schieber abhebt.

Bei einem anderen Verschleißausgleichmechanismus treibt eine Antriebsklinke einen Spindeltrieb an, indem sie bei Vorliegen eines vorgegebenen Verschleißes ein Ritzel bewegt. Dabei ist die Antriebsklinke der Sensor zur Sensierung von Verschleiß.

WO 01/75322 A1 offenbart eine Kupplung mit Verschleißausgleichsmechanismus. Der Sensor umfasst einen Klinkenmechanismus.

DE 10 2015 104 166 A1 betrifft eine Kupplung mit Verschleißausgleichsmechanismus. Der Sensor weist einen Hebel und eine Klinke auf.

Aufgrund der konstruktiven Ausgestaltung des Sensors ist der Verstellmechanismus zur Verstellung einer der Rampeneinheiten aufwendig und teuer und nur zur Sensierung von Belagverschleiß ausgebildet.

Ausgehend hiervon ist es Aufgabe der vorliegenden Erfindung, eine Kupplung mit einem Verschleißausgleichmechanismus bereitzustellen, der kostengünstiger herstellbar ist.

Zur Lösung dieser Aufgabe ist vorgesehen, dass an der Sensorfläche des Sensorelementes eine verschiebbare Rampe angeordnet ist.

Als Kern der Erfindung wird angesehen, dass das Sensorelement geringfügig komplizierter aufgebaut ist, dafür aber andere Teile des Verschleißausgleichsmechanismus einfacher ausgestaltet werden können, wobei hierdurch der kompliziertere Aufbau des Sensorelementes überkompensiert wird. Durch diesen Aufbau des Sensorelementes wird insbesondere erreicht, dass das Erkennen oder die Wirkung von Verschleiß nicht in axialer Richtung erfolgt, sondern in Umfangsrichtung.

Bevorzugt kann das Sensorelement genau zwei Bauteile aufweisen. Diese sind wie beschrieben drehbar miteinander verbunden. Dabei ist weiter bevorzugt, dass die Sensorelemente an jeweils einem ihrer Enden miteinander verbunden sind. Grundsätzlich könnten die Sensorelemente auch kreuzförmig miteinander verbunden sein. Bei Verbindung zweier Enden wird aber der geringste Bauraum benötigt.

Bevorzugt können die Sensorbauteile einen Kniehebel bilden. Dessen Spitze weist bevorzugt in Richtung Kupplungsgehäuse, mit anderen Worten weist die Spitze des Kniehebels bevorzugt in axialer Richtung. Die Basis, also die beiden freien Enden des Kniehebels, weisen vorzugsweise in Richtung einer Anpressplatte.

Vorzugsweise können die Sensorbauteile stangen- oder plattenförmig ausgebildet sein. Dadurch sind die Sensorbauteile einfach herzustellen.

Vorzugsweise kann ein Sensorbauteil an eine Anpressplatte der Kupplung befestigt sein. Insbesondere kann das Sensorbauteil drehbar befestigt sein. Üblicherweise sind die Sensorelemente nicht an der Anpressplatte befestigt, da an der Anpressplatte der Antrieb zur Verstellung von Rampeneinheiten befestigt ist, und bei einer Sensierung des Verschleißes in axialer Richtung dann eine Verstellung des Sensors gegenüber anderen Bauteilen bzw. damit zusammenwirkenden Bauteilen des Verschleißausgleichmechanismus nur möglich ist, wenn das Sensorelement beispielsweise am Kupplungsgehäuse befestigt ist. Aufgrund dieser Anordnung ist es aber möglich, die anderen Kupplungsbauteile unverändert zu lassen.

Vorteilhafterweise kann an einem Sensorbauteil ein Antriebselement zur Verstellung wenigstens eines den Verschleiß ausgleichenden Elementes befestigt sein. Insbesondere kann das Antriebselement drehbar befestigt sein. Wie weiter oben bereits beschrieben wird es aufgrund der Zweiteiligkeit oder Mehrteiligkeit des Sensorelementes möglich, die Sensierung des Verschleißes aus der Axialrichtung in die Umfangsrichtung umzulenken. Dadurch kann das Antriebselement direkt am Sensorelement und dort am Sensorbauteil mit freiem Ende befestigt werden. Auf diese Art und Weise braucht es beispielsweise kein Blockierelement, es muss aber auch keine Klinke mit einem Ritzel zusammenwirken, um einen Spindeltrieb anzutreiben. Dadurch sind das Sensorelement und die Antriebseinheit verschmolzen und weisen insgesamt nur im Wesentlichen drei einfache Bauteile auf, wobei dann noch beispielsweise die Befestigungselemente zur drehbaren Befestigung dazukommen.

Vorzugsweise können zwei Sensorbauteile mit einer Vorspannung belastet sein. Die Vorspannung kann insbesondere auf Zug sein. Hierfür kann beispielsweise eine Feder verwendet werden. Durch die Vorspannung wird das Sensorelement in eine Grundposition gebracht, sodass auch nach einer erfolgten Verschleißsensierung oder überhaupt nach jeder Bewegung des Sensors eine Ausgangsposition wieder herstellbar ist.

Vorteilhafterweise kann der Verschleißausgleichmechanismus zwei gegenläufige Rampenanordnungen aufweisen. Jede Rampenanordnung kann wie weiter oben bereits beschrieben mehrere in Umfangsrichtung hintereinander angeordnete Rampen umfassen. Durch Verschiebung der Rampenanordnungen gegeneinander wird der Verschleißausgleich hergestellt. Dabei ist es bekannt, beispielsweise eine Rampenanordnung integral an der Anpressplatte anzubringen und die zweite Rampenanordnung verschiebbar gegenüber dieser Rampenanordnung auszugestalten. Es können aber auch beide Rampenanordnungen als Rampenringe ausgebildet sein.

Weiterhin ist an der Sensorfläche des Sensorelementes eine Rampe angeordnet. Die Sensorfläche des Sensorelementes wird insbesondere über die Befestigungsstelle der Sensorbauteile gebildet. Mit anderen Worten kann es sich dabei um das Knie des Kniehebels handeln. Die Rampe ist insbesondere so angeordnet, dass sie bei zunehmendem Verschleiß den Abstand der Sensorfläche zur Gegenfläche verringert. Bei entsprechender Ausgestaltung der Rampe kann so ein Gehäuseverschleiß sensierbar werden. Dann dient der Sensor nicht nur zur Sensierung von Belagverschleiß sondern auch von Gehäuseverschleiß.

Vorteilhafterweise kann das Sensorelement den Abstand zwischen Anpressplatte und Membranfeder sensieren. Dies bedeutet auch mit anderen Worten, dass der Anstellwinkel der Membranfeder sensiert wird. Dabei wird insbesondere der Minimalabstand zwischen Membranfeder und Anpressplatte sensiert und bei Unterschreiten eines aufgrund der konstruktiven Gegebenheiten unterschrittenen Mindestabstands wird dann ein Verschleißausgleich durchgeführt.

Vorzugsweise kann an einer Anpressplatte der Kupplung eine Führungsschiene zur Führung des Sensorelementes angeordnet sein. Dies dient einer Stabilisierung des Sensorelementes, das wie beschrieben mehrteilig ausgebildet ist.

Vorteilhafterweise kann die Kupplung eine Anpressplatte aufweisen, die mit Blattfedern am Kupplungsgehäuse befestigt ist.

Vorzugsweise kann die Kupplung einen Kraftspeicher oder ein Hebelelement, insbesondere eine Membranfeder, aufweisen. Im ersten Fall handelt es sich dann um eine normally-closed-Kupplung und im zweiten Fall um eine normally-open-Kupplung. Daneben betrifft die Erfindung ein Kraftfahrzeug mit einer Kupplung. Das Kraftfahrzeug zeichnet sich dadurch aus, dass die Kupplung wie beschrieben ausgebildet ist.

Weiter Vorteile, Merkmale und Einzelheiten der Erfindung ergeben sich aus der folgenden Beschreibung von Ausführungsbeispielen und Figuren. Dabei zeigen:
- Figur 1: ein Kraftfahrzeug,
- Figur 2: eine Kupplung in einer ersten Ansicht,
- Figur 3: die Kupplung in einer zweiten Ansicht, und
- Figur 4: die Kupplung in einer dritten Ansicht.

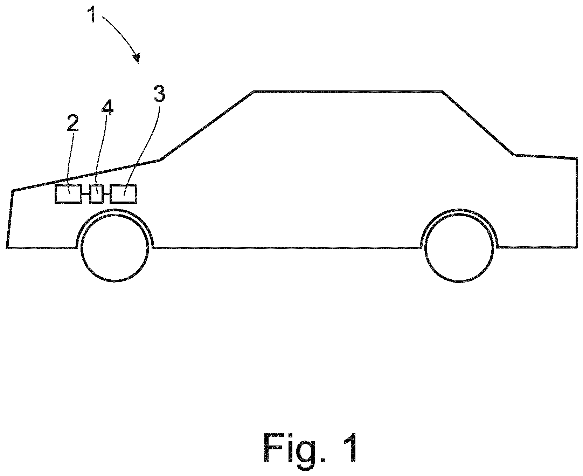

Figur 1 zeigt ein Kraftfahrzeug 1 mit einer Antriebseinheit 2, einem Getriebe 3 und einer zwischen Antriebseinheit 2 und Getriebe 3 angeordneten Kupplung 4. Bei der Antriebseinheit 2 kann es sich um einen Verbrennungsmotor oder einen Elektromotor handeln. Die Anbindung der Antriebseinheit 2 an das Getriebe 3 kann dabei auch derart sein, dass die Antriebseinheit 2 einen Nebenantrieb darstellt, dass also weitere Antriebseinheiten und Kupplungen vorhanden sein können. Das Kraftfahrzeug 1 kann also einen Antriebsstrang mit einem Verbrennungsmotor, einen Hybrid-Antriebsstrang oder auch einen rein elektrischen Antriebsstrang aufweisen. Darüber hinaus kann der beschriebene Verschleißausgleichsmechanismus auch in Doppelkupplungen oder Mehrscheibenkupplungen verwendet werden, sofern diese Anpressplatten aufweisen.

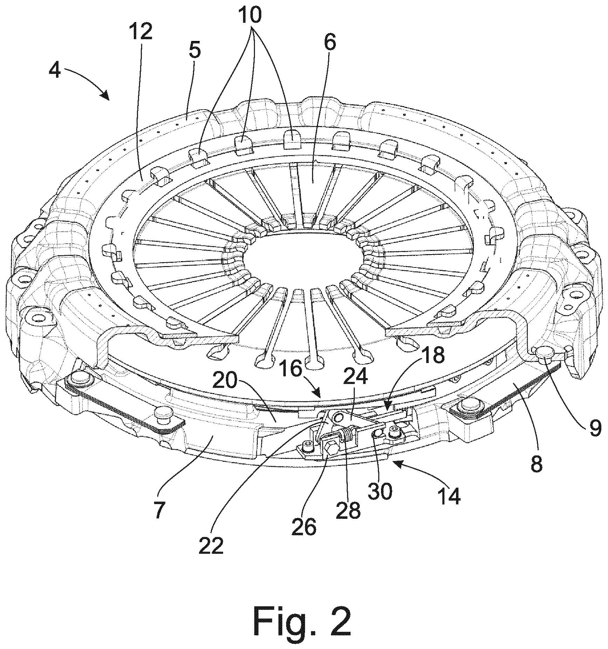

Figur 2 zeigt die Kupplung 4 im Detail. Die Kupplung 4 weist als grundlegende Bauteile das Kupplungsgehäuse 5, eine Membranfeder 6 und eine Anpressplatte 7 auf. Die Anpressplatte 7 und das Kupplungsgehäuse 5 sind über Blattfedern bzw. Blattfederpakete 8 drehbar und axial beweglich miteinander verbunden. Die Blattfederpakete 8 sind mittels Nieten 9 am Kupplungsgehäuse 5 und der Anpressplatte 7 befestigt.

Die Membranfeder 6 ist über Distanzbolzen 10 an dem Kupplungsgehäuse 5 gelagert, wobei die Distanzbolzen 10 mittels eines Sicherungsringes 12 befestigt sind.

Weiterhin umfasst die Kupplung 4 einen Verschleißausgleichmechanismus 14.

Ein Verschleißausgleichmechanismus 14 umfasst üblicherweise ein Sensorelement 16, eine Antriebseinheit 18 und einen Kompensationsmechanismus 20, die wie folgt zusammenarbeiten:
Das Sensorelement 16 sensiert einen Verschleiß des Kupplungsscheibenbelags, wodurch die Antriebseinheit 18 aktiviert wird, die üblicherweise bei Überschreiten eines Schwellenwertes eine Verstellung des Kompensationsmechanismus 20 bewirkt, sodass der Verschleiß, beispielsweise ein Verschleiß des Kupplungsscheibenbelags, kompensiert wird.

Der Verschleißmechanismus umfasst üblicherweise zwei Rampenanordnungen mit gegenläufigen Rampen.

Das Sensorelement 1, das bei bekannten Verschleißausgleichmechanismen einteilig ausgebildet ist, ist im Verschleißausgleichmechanismus 14 zweiteilig und umfasst das Sensorbauteil 22 sowie das Sensorbauteil 24.

Dabei ist das Sensorbauteil 22 an der Anpressplatte 7 befestigt, und zwar über die Führungsschiene 26. Über die Führungsschiene lässt sich insbesondere die Bewegung des Sensorbauteils 24 kontrollieren.

Das Sensorbauteil 22 und das Sensorbauteil 24 sind mittels der Feder 28 auf Zug vorbelastet. Dadurch erhält das Sensorelement 16 in Form der Sensorbauteile 22 und 24 eine Grundposition. Mittels eines Anschlags 30 an der Führungsschiene 26 wird diese Grundposition definiert.

Das Sensorbauteil 22 und das Sensorbauteil 24 bilden einen Kniehebel 32, dessen Knie 34 in axialer Richtung des Kupplungsgehäuses 5 bzw. der Membranfeder 6 weist und dessen Basis in Richtung Anpressplatte 7 weist.

Die Sensorbauteile 22 und 24 sind stangenförmig ausgebildet.

Die Antriebseinheit 18 des Verschleißausgleichmechanismus 14 besteht lediglich aus einem Zuganker 36, der an dem Sensorbauteil 24 drehbar befestigt ist und der entlang eines der Rampenringe 38 des Kompensationsmechanismus 20 entlanggleitet.

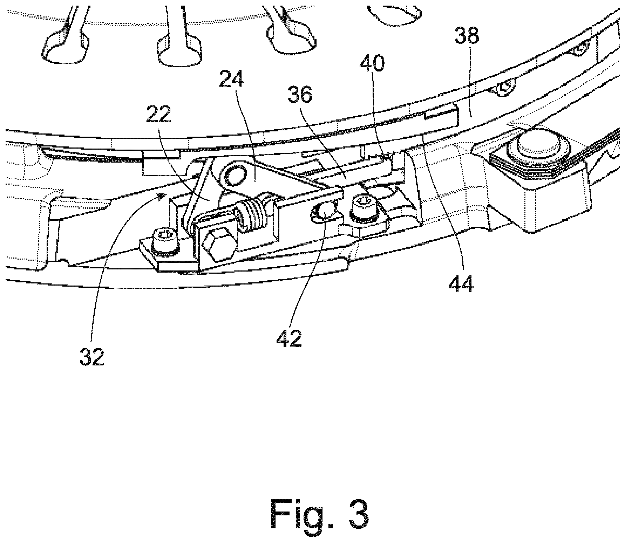

Die Funktionsweise des Verschleißausgleichmechanismus 14 wird anhand von Figur 3 beschrieben. Beim Einkuppeln bewegt sich der Außenteil der Membranfeder in Richtung Anpressplatte 7. Dies ist jedenfalls dann der Fall, wenn die Kupplung 4 als sogenannte gedrückte Kupplung ausgeführt ist. Je größer der Verschleiß bzw. bei Vorliegen von Verschleiß wird dabei der Abstand zwischen Membranfeder 6 und Anpressplatte 7 geringer, wodurch die Sensorbauteile 22 und 24 an der Basis, d.h. an der Anpressplatte 7 zugewandten Enden auseinander gedrückt werden. Am Knie 34 sind sie drehbar befestigt und können sich nicht voneinander entfernen. Je kleiner der Abstand zwischen Membranfeder 6 und Anpressplatte 7 wird, desto weiter wird dadurch der Zuganker 36 entgegen dem Uhrzeigersinn in Umfangsrichtung gedreht. Der Verschleißausgleichmechanismus lässt sich selbstverständlich auch spiegelbildlich aufbauen, die Bewegung entgegen dem Uhrzeigersinn ist daher rein exemplarisch. Wird ein über die Längen der Sensorbauteile 22 und 24 vorgebbarer Verschleiß überschritten, erreicht der Zuganker 36 den nächsten der Zähne 40, die fest mit dem Rampenring 38 verbunden sind. Die Zähne 40 können dabei direkt in den Rampenring 38 eingearbeitet sein, sie können sich aber auch beispielsweise auf einer mit dem Rampenring 38 fest verbundenen Platte befinden. Jedenfalls hakt der Zuganker 36 bei Überschreiten eines vorgegebenen Weges in den nächsten Zahn 40 ein. Beim nächsten Ausrücken der Kupplung 4 wird der Rampenring 38 freigegeben und kann mittels der Feder 28 im Uhrzeigersinn bewegt werden, bis der Kniehebel 32 wieder in der Grundposition ist.

Dabei erfüllt das Verbindungselement 42 zwischen Sensorbauteil 24 und Zuganker 36 eine Doppelfunktion, da das Sensorbauteil 24 führt und gleichzeitig als Anschlag wirkt.

An dem Rampenring 38 ist weiterhin eine Rampe 44 befestigt, die die Gegenfläche zur Sensorfläche des Kniehebels 32 bildet. Die Sensorfläche ist also das Knie 34, die mit der Rampe 44 in Kontakt kommt, wenn sich die Membranfeder 6 auf die Anpressplatte 7 hinbewegt. Die Rampe 44 ist dabei mit dem Rampenring 38 drehfest verbunden, sodass bei Verdrehung des Rampenrings 38 die Rampe 44 im gleichen Maße verdreht wird. Mittels der Rampe 44 wird ein Gehäuseverschleiß in den Gesamtausgleich einbezogen. Der Verschleißausgleichmechanismus 20 kann dann nicht nur Belagverschleiß sondern auch Gehäuseverschleiß ausgleichen.

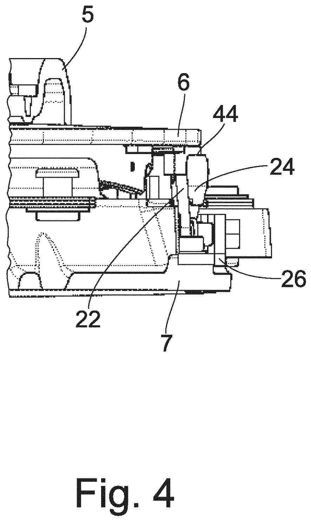

Figur 4 zeigt den Verschleißausgleichmechanismus bzw. einen Teil der Kupplung 4 im Querschnitt. Dabei sind die Führungsschiene 26, die Sensorbauteile 22 und 24 wie auch die Rampe 44 erkennbar.

### Bezugszeichen

- 1: Kraftfahrzeug
- 2: Antriebseinheit
- 3: Getriebe
- 4: Kupplung
- 5: Kupplungsgehäuse
- 6: Membranfeder
- 7: Anpressplatte
- 8: Blattfederpaket
- 9: Niet
- 10: Distanzbolzen
- 12: Sicherungsring
- 14: Verschleißausgleichsmechanismus
- 16: Sensorelement
- 18: Antriebseinheit
- 20: Kompensationsmechanismus
- 22: Sensorbauteil
- 24: Sensorbauteil
- 26: Führungsschiene
- 28: Feder
- 30: Anschlag
- 32: Kniehebel
- 34: Knie
- 36: Zuganker
- 38: Rampenring
- 40: Zahn
- 42: Verbindungselement
- 44: Rampe

## Patentansprüche

1. Kupplung (4) für ein Kraftfahrzeug (1) mit einem Verschleißausgleichsmechanismus (14), der ein Sensorelement (16) zum Erfassen von Verschleiß umfasst, wobei das Sensorelement (16) mehrteilig ausgebildet ist und zumindest zwei Sensorbauteile (22, 24) drehbar miteinander verbunden sind, **dadurch gekennzeichnet, dass** an der Sensorfläche des Sensorelementes (16) eine verschiebbare Rampe (44) angeordnet ist.

2. Kupplung nach Anspruch 1, **dadurch gekennzeichnet, dass** das Sensorelement (16) zwei Bauteile (22, 24) aufweist.

3. Kupplung nach Anspruch 1 oder 2, **dadurch gekennzeichnet, dass** die Sensorbauteile (22, 24) einen Kniehebel (32) bilden.

4. Kupplung nach Anspruch 3, **dadurch gekennzeichnet, dass** das Knie (34) des Kniehebels (32) in Richtung Kupplungsgehäuse (5) weist.

5. Kupplung nach Anspruch 3 oder 4, **dadurch gekennzeichnet, dass** die Basis des Kniehebels (32) in Richtung einer Anpressplatte (7) weist.

6. Kupplung nach einem der vorangehenden Ansprüche, **dadurch gekennzeichnet, dass** die Sensorbauteile (22, 24) stangen- oder plattenförmig ausgebildet sind.

7. Kupplung nach einem der vorangehenden Ansprüche, **dadurch gekennzeichnet, dass** ein Sensorbauteil (22) an einer Anpressplatte (7) der Kupplung (4) befestigt ist.

8. Kupplung nach einem der vorangehenden Ansprüche, **dadurch gekennzeichnet, dass** zwei Sensorbauteile (22, 24) mit einer Vorspannung belastet sind.

9. Kupplung nach einem der vorangehenden Ansprüche, **dadurch gekennzeichnet, dass** an einem Sensorbauteil (24) ein Antriebselement (36) zur Verstellung wenigstens eines den Verschleiß ausgleichenden Elementes (38) befestigt ist.

10. Kupplung nach Anspruch 9, **dadurch gekennzeichnet, dass** das Antriebselement (36) drehbar befestigt ist.

11. Kupplung nach einem der vorangehenden Ansprüche, **dadurch gekennzeichnet, dass** der Verschleißausgleichsmechanismus (14) zwei gegenläufige Rampenanordnungen (38) aufweist.

12. Kupplung nach einem der vorangehenden Ansprüche, **dadurch gekennzeichnet, dass** das Sensorelement (16) den Abstand zwischen einer Anpressplatte (7) und einer Membranfeder (6) sensiert.

13. Kupplung nach einem der vorangehenden Ansprüche, **dadurch gekennzeichnet, dass** an einer Anpressplatte (7) der Kupplung (4) eine Führungsschiene (26) zur Führung des Sensorelementes (16) angeordnet ist.

14. Kraftfahrzeug (1) mit einer Kupplung (4), **dadurch gekennzeichnet, dass** die Kupplung (4) nach einem der vorangehenden Ansprüche ausgebildet ist.

## Claims

1. Clutch (4) for a motor vehicle (1) having a wear-compensating mechanism (14) which comprises a sensor element (16) for detecting wear, wherein the sensor element (16) is of multi-part form and at least two sensor components (22, 24) are rotatably connected to one another, **characterized in that** a displaceable ramp (44) is arranged on the sensor surface of the sensor element (16).

2. Clutch according to Claim 1, **characterized in that** the sensor element (16) has two components (22, 24).

3. Clutch according to Claim 1 or 2, **characterized in that** the sensor components (22, 24) form a knee lever (32) .

4. Clutch according to Claim 3, **characterized in that** the knee (34) of the knee lever (32) points in the direction of the clutch housing (5).

5. Clutch according to Claim 3 or 4, **characterized in that** the base of the knee lever (32) points in the direction of a pressure plate (7).

6. Clutch according to any of the preceding claims, **characterized in that** the sensor components (22, 24) are of rod-shaped or plate-shaped form.

7. Clutch according to any of the preceding claims, **characterized in that** a sensor component (22) is fastened to a pressure plate (7) of the clutch (4).

8. Clutch according to any of the preceding claims, **characterized in that** two sensor components (22, 24) are subjected to a preload.

9. Clutch according to any of the preceding claims, **characterized in that** a drive element (36) for adjusting at least one wear-compensating element (38) is fastened to a sensor component (24).

10. Clutch according to Claim 9, **characterized in that** the drive element (36) is rotatably fastened.

11. Clutch according to any of the preceding claims, **characterized in that** the wear-compensating mechanism (14) has two opposite ramp arrangements (38).

12. Clutch according to any of the preceding claims, **characterized in that** the sensor element (16) senses the spacing between a pressure plate (7) and a diaphragm spring (6).

13. Clutch according to any of the preceding claims, **characterized in that** a guide rail (26) for guiding the sensor element (16) is arranged on a pressure plate (7) of the clutch (4).

14. Motor vehicle (1) having a clutch (4), **characterized in that** the clutch (4) is designed according to any of the preceding claims.

## Revendications

1. Embrayage (4) pour un véhicule automobile (1) comprenant un mécanisme de compensation de l'usure (14) qui comprend un élément de capteur (16) pour détecter l'usure, l'élément de capteur (16) étant réalisé en plusieurs parties et au moins deux composants de capteur (22, 24) étant connectés de manière rotative l'un à l'autre, **caractérisé en ce qu'**une rampe coulissante (44) est disposée au niveau de la surface de capteur de l'élément de capteur (16).

2. Embrayage selon la revendication 1, **caractérisé en ce que** l'élément de capteur (16) présente deux composants (22, 24).

3. Embrayage selon la revendication 1 ou 2, **caractérisé en ce que** les composants de capteur (22, 24) forment un levier coudé (32).

4. Embrayage selon la revendication 3, **caractérisé en ce que** le coude (34) du levier coudé (32) est orienté dans la direction du boîtier d'embrayage (5) .

5. Embrayage selon la revendication 3 ou 4, **caractérisé en ce que** la base du levier coudé (32) est orientée dans la direction d'une plaque de pressage (7).

6. Embrayage selon l'une quelconque des revendications précédentes, **caractérisé en ce que** les composants de capteur (22, 24) sont réalisés en forme de tige ou de plaque.

7. Embrayage selon l'une quelconque des revendications précédentes, **caractérisé en ce qu'**un composant de capteur (22) est fixé à une plaque de pressage (7) de l'embrayage (4).

8. Embrayage selon l'une quelconque des revendications précédentes, **caractérisé en ce que** deux composants de capteur (22, 24) sont sollicités avec une précontrainte.

9. Embrayage selon l'une quelconque des revendications précédentes, **caractérisé en ce qu'**un élément d'entraînement (36) pour le réglage d'au moins un élément (38) compensant l'usure est fixé au niveau d'un composant de capteur (24).

10. Embrayage selon la revendication 9, **caractérisé en ce que** l'élément d'entraînement (36) est fixé de manière rotative.

11. Embrayage selon l'une quelconque des revendications précédentes, **caractérisé en ce que** le mécanisme de compensation d'usure (14) présente deux agencements de rampe de sens opposés (38).

12. Embrayage selon l'une quelconque des revendications précédentes, **caractérisé en ce que** l'élément de capteur (16) détecte la distance entre une plaque de pressage (7) et un diaphragme (6) .

13. Embrayage selon l'une quelconque des revendications précédentes, **caractérisé en ce qu'**un rail de guidage (26) pour le guidage de l'élément de capteur (16) est disposé au niveau d'une plaque de pressage (7) de l'embrayage (4).

14. Véhicule automobile (1) comprenant un embrayage (4), **caractérisé en ce que** l'embrayage (4) est réalisé selon l'une quelconque des revendications précédentes.
